# EUROPEAN PATENT APPLICATION

(11) **EP 1 374 673 A1**
(43) Date of publication of application: **02.01.2004**
(21) Application number: 03013677.4
(22) Date of filing: 17.06.2003
(51) Int. Cl.: A01K 95/00

(54) **Fishing sinker**

(30) Priority: 26.06.2002 US 391653 P; 05.11.2002 US 288136
(71) Applicant: WATER GREMLIN COMPANY, White Bear Lake, MN 55110 (US)
(72) Inventor: Ratte, Robert W., North Oaks, MN 55127 (US)
(74) Representative: Modiano, Guido, Dr.-Ing.

(57) **Abstract**

A body of material having a high specific gravity to enable use as a weight for fishing with the body of material having an external casing or skin covering that conforms to the exterior surface of the body of material to inhibit fracturing or prevent loss of the sinker parts should the body of material fracture. In addition, the covering can incorporate a visual indicator to assist a user in identifying the type of sinker as well as providing other information to the user.

## Description

### FIELD OF THE INVENTION

This invention relates generally to fishing sinkers and, more specifically, to a fishing sinker having a casing thereon to inhibit the fracture of the fishing sinker during normal fishing activities and to retain pieces of the fishing sinker should the sinker fracture.

### CROSS REFERENCE TO RELATED APPLICATIONS

This application claims priority from my provisional application SN 60/391,653 filed June 26, 2002 titled Skin on Sinker.

### STATEMENT REGARDING FEDERALLY SPONSORED RESEARCH OR DEVELOPMENT

None

### REFERENCE TO A MICROFICHE APPENDIX

None

### BACKGROUND OF THE INVENTION

One of the common types of fishing sinkers is made of lead which is preferred because it is both inexpensive and easily configurable for attachment to a fishing line. From time to time, concerns about toxicity caused by lead in the environment has led to a search for substitute materials to be utilized in fishing sinkers. However, other materials lack the high specific gravity of lead and are therefore less desirable, consequently, lead continues to be used in fishing sinkers.

One of a potential of alternate metals having a high specific gravity is bismuth. Unfortunately, bismuth is a fragile metal that generally renders it unsuitable for use in fishing sinkers due to the difficulty of extracting a bismuth sinker from a mold cavity without fracturing the sinker. Ratte U.S. patent 6,325,136 describes a method of forming a bismuth containing sinker that avoids the fracture of the sinker during the molding process.

Bismuth has been alloyed with various metals such as tin for use in waterfowl shot. For example, the Griffin patent 5,719,352 suggest one should alloy bismuth with tin or lead and the article by Brown points out that the use of bismuth tin alloys in shot for waterfowl hunting has been increasing since 1994 with the waterfowl shot comprising a bismuth alloy of 97% bismuth and 3% tin. Alloys suitable for waterfowl shot are not necessarily suitable for fishing sinkers, since use of a bismuth alloy in shot is a one time event and the use of a sinker involves subjecting the sinker to repeated impact abuse with the sinker required to retain its integrity over an extended period of time. In addition, if the sinker should fracture during use it is preferred that the fractured portions of the sinker are retained.

Although the frangiblity of bismuth during molding a fishing sinker and removing the sinker is a problem which is addressed in Ratte U.S. patent 6,325,136 unfortunately the frangiblity of a molded bismuth or bismuth alloy sinkers during certain types of fishing can also cause problems. That is, if the bismuth or bismuth alloy sinker is cast onto a rock or some other hard object the force of impact can exceed the impact resistance of the sinker causing the sinker to fracture and fall off the line. The present invention provides a solution to the sinker fracture problem by placing a thin compressive skin over the exterior of the sinker with the skin under sufficient tension so as to provide a compressive force to an exterior surface of the sinker to thereby inhibit the sinker from fracturing during high impact conditions. By compressive skin it is meant that a layer of material encapsulates at least a major portion of the sinker and provides a compartment for retaining portions of sinker that might fracture during abusive use. The present invention further provides a casing that conforms to the exterior shape of the body of the sinker so that the casing is retained on the body of material by the interlocking relationship between the casing and the body of material.

The Biss Patent 5,233,786 discloses the concept of an adjustable flexible sinker using shrink wrap to hold a plurality of individual round fishing sinkers with the shrink wrap partially encapsulating each of a plurality of round shot in an elongated tube jacket and then forming a tang portion in the shrink wrap for hooking his flexible sinker to a line. To obtain the weight adjustability, his sinker tube is cut to remove unwanted sinkers in theshrink wrap. The Biss patent suggest the use of steel shot together with small amounts of other heavy metals. Biss does not recognize the problem of frangible sinkers such as bismuth sinkers. Biss further uses the shrink wrap as a package to hold a plurality of fishing sinkers in the package by engaging opposite poles of a row of his spherical sinkers so that one or more of the plurality of fishing sinkers can be severed from the package by cutting the package between the row of sinkers. Thus, he does not use his shrink wrap as a skirthat conforms to the exterior surface of the sinker since he uses the shrink wrap to engage pole areas of his spherical sinkers and then provides sufficient free space between sinkers so that one or more sinkers can be separated from his package.

Another U.S. patent 4,077,151 discloses a covering for a sinker with the covering comprising a flexible bag that to holds sand or the like with the bag having a weakened region so as to tear apart if a snag is encountered.

In contrast to the prior art that uses bags or shrink plastic as a container to hold fishing sinkers the present invention uses a skin or casing around substantially the entire exterior surface of a frangible sinker to inhibit the fracture of the fishing sinker should the fishing sinker come into high impact contact with a hard object such as a rock or the like and to contain any portions of the sinker that may break during such abusive use of the sinker. One would assume that by increasing the forces on frangible material that the fishing sinker would fracture more easily. To the contrary, by inducing a uniform compressive stress on substantially the entire body of the frangible fishing sinker it has been found that one can inhibit the frangible sinker from shattering upon impact with a hard object or the like. It is believed that the compressive skin distributes high impact forces over a wider portion of the frangible sinker resulting in the localized region of impact receiving an impact which below an impact threshold level where the frangible sinker would normally fracture. In addition, even if the frangible sinker should fracture the fracture portions can be retained within the sinker skin thereby preventing loss of material into the environment. By maintaining a skin of only a few mills and conforming the skin to the exterior surface of the mold one can produce a frangible sinker such as a bismuth fishing sinker that operates in the same manner as a conventional lead sinker.

A further feature of the invention is that the skin on the sinker can incorporate a visual indicator such as color or other indicia to provide the user a guide to the weight of the sinker or some other characteristics of the sinker. For example, a red color could be use for one weight sinker and a blue color could be used for another sinker or the sinker color could be coordinated to work with the fishing rig.

Thus, in one embodiment the present invention provides an environmental friendly sinker by alloying a frangible non-toxic material such as bismuth with another metal to takes advantage of the high specific gravity of bismuth while compressively encapsulating the sinker with a skin to produces a sinker of enhanced impact resistant so as to inhibit the sinker breaking during use and of sufficiently high specific gravity so that the sinker will sink itself as well as fishing tackle connected thereto in a manner similar to the well known lead sinkers.

A further feature of the inventions is that the casing need not be compressivley secured to the fishing sinker body but can have a configuration that substantially conforms or interlocks to the body of the sinker to prevent the casing from being removed from the sinker body. In this embodiment the casing functions to contain and confine any portions of the sinker body should the sinker body break apart.

### SUMMARY OF THE INVENTION

A body of material having a high specific gravity to enable use as a weight for fishing with the body of material having an external skin or casing on the exterior surface of the body of material that conforms to the exterior surface of the body of material to inhibit fracturing and prevent fracture or loss of the sinker should the body of material fracture. In addition, the casing can incorporate a visual indicator to assist a user in identifying the type and size of sinker as well as other information.

### BRIEF DESCRIPTION OF THE DRAWINGS

Figure 1 is shows a bismuth fishing sinker with a tube of shrink wrap plastic therearound;
Figure 2 shows the bismuth fishing sinker of Figure 1 with theshrink wrap partially contacted;
Figure 3 shows the bismuth sinker with the shrink wrap plastic having been conformed to the exterior surface of the fishing sinker;
Figure 4 shows a cross sectional view of a bullet shaped frangible sinker having a skin surrounding a major portion of the sinker; and
Figure 5 shows an alternate embodiment of sinker skin whereina webbing surrounds the fishing sinker to confine the sinker therein in the event the sinker is fractured during abusive use.

### DESCRIPTION OF THE PREFERRED EMBODIMENT

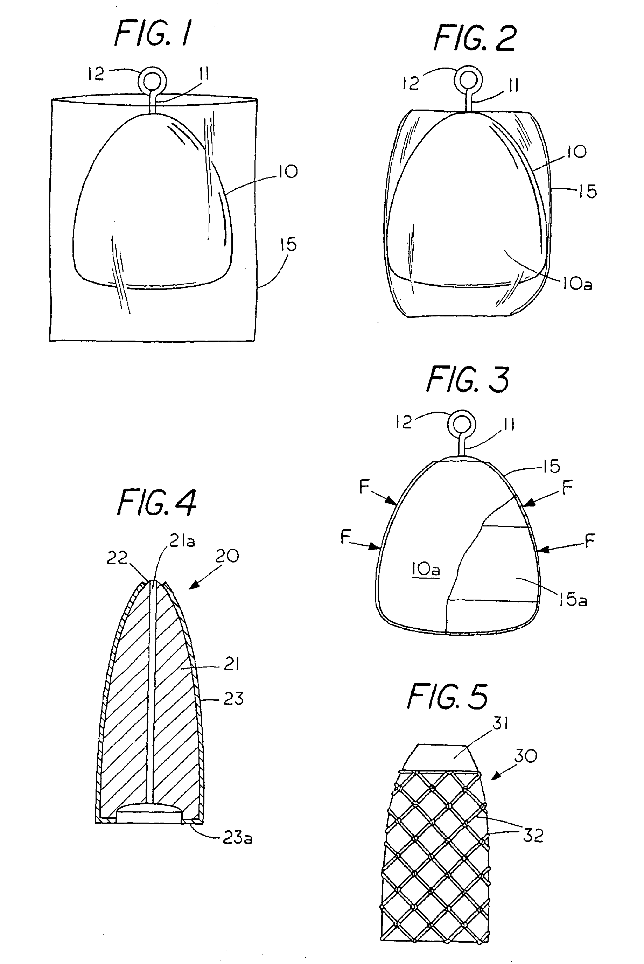

Figure 1 discloses a fishing sinker 10 having a member such as a shank 11 with an internal line attachment member comprising an eye 12 for securing to a fishing line. Fishing sinkers, which have been made from lead, are well known in the art and have been used with various fishing rigs and fishing techniques. The invention shown in Figure 1 comprises a frangible fishing sinker 10 that is made from bismuth or a bismuth alloy. In general, it is preferred to have the fishing sinker with a specific gravity of at least 7 or7.5 which is readily obtainable with bismuth or alloys of bismuth. Bismuth has the advantage of lacking the toxicity of lead and has the high specific gravity making it suitable for use in fishing sinkers. As pointed out, one of the drawbacks of bismuth or bismuth alloy fishingsinkers is that the bismuth containing fishing sinkers are frangible, that is a bismuth has low impact resistance and can fracture into pieces during an impact with a hard object. Consequently, when casting, if a frangible sinker hits a rock or some other hard object the impact can sometimes fracture the sinker causing the fishing sinker to fall off the line. Even though materials such as bismuth may not be toxic it is annoying to have to replace the sinker if the sinker accidentally breaks. In order to inhibit the sinker from fracturing a skin 15 is extended on the exterior surface of the skin to compressively encapsulate the frangible fishing sinker. While various types of skin are usable with the present invention one type of skin is thewell known shrink wrap PVC plastic. Figure 1 shows a compressive skin 15 comprisingshrink wrap plastic that is located around the bismuth sinker 10. In the embodiment shown the shrink wrap plastic 15 is preferably in the form of an elongated tube so that the sinker 10 can be inserted therein and the plastic shroud conformed to the exterior configuration of the sinker.

Figure 2 shows sinker 10 with the skin 15 located in a partially contracted condition next to the exterior surface 10a of the bismuth fishing sinker 10. As can be seen the skin, which comprises shrink wrap plastic, 15 has been drawn toward the sinker 10 by the application of heat. The concept of shrink wrap plastics, which contract when exposed to heat, are well known in the art and will not be discussed herein.

Figure 3 shows the fishing sinker 10 in the ready to use state with skin 15 thereon shown in cross section to reveal the compressive conformance of the skin 15 to the exterior surface 10a of the fishing sinker. That is, skin 15 compressively conforms snugly to the outer surface of the fishing sinker to provide a smooth surface that will not snag or catch on the weeds. In addition, whershrink wrap 15 is contracted or stretched sufficiently it results in radial inward compressive forces F, which are distributed around the fishing sinker 10. As a result, the fishing sinker 10 appears as a conventional shaped fishing sinker and more importantly functions as a conventional lead sinker without the environmental concern. That is the substantially complete conformance of the skin to the fishing sinker not only provides a compressive support for the frangible sinker but also does not hinder the operation of the fishing sinker during normal casting. Likewise, by having the skin on the order of a few thousands of an inch it does not affect the buoyancy of the fishing sinker. A further feature that is envisioned is that the sinker can more easily pulled away from snags since skin 15 not only conforms to the body of the sinker but presents a smooth finished surface to the sinker.

While skin 15 is shown compressively conforming to the exterior surface of skin 10 it is envisioned that a layer of adhesive could be applied to the exterior surface of the sinker thereby securing the skin in position on the sinker.

While the extent of the skin covering on the sinker can vary with the type of sinker and the use, the skin need not completely cover the frangible sinker. For example, the skin can compressively and conformably covers at least 90 % of the frangible body of material. It should be understood that the extent of skin coverage will vary with the application and that varies amount of skin cover can be used with the present invention. While various thickness of skin can be used to avoid the skin increasing the buoyancy of the sinker in most instance the skin should have a thickness of .010 inches or less.

Figure 3 further illustrated a further feature of the present invention, namely a visual indicator to provide the user with instant information of some characteristic of the sinker such as weigh or the like. Skin 15 includes a color band 15a extending around the skin 15 to provide the user with information on thesinker . For example, a red color could indicate 1/8 ounce fishing sinker and a blue color a different weight sinker. In addition, the visual indictor could encompass the entire sinker or could be in the form of a pattern. Thus the advantage of the present invention that a visual indicator can be readily incorporated into a fishing sinker.

Thus in one embodiment the present invention includes a method of making a frangible metal sinker such as bismuth alloy or bismuth fishing sinker: comprising the steps of: 1. pouring a molten metal into a fishing sinker mold 2. allowing the molten metal to solidify in the fishing sinker mold to form a metal fishing sinker; 3. removing the solidified metal fishing sinker from the fishing sinker mold; 4 placing a shrink wrap film material around an exterior surface of the solidified metal sinker; and 5 heating the shrink wrap film material to bring the shrink wrap film into compressive confinement of the solidified metal to thereby inhibit the fracturing of the metal fishing sinker if the metal fishing sinker is impacted by an external force and if desired placing a visual indicator such as a colored pigment.

Figure 4 shows an alternate embodiment of the invention comprising a fishing sinker 20 having a main body 21 with an internal line attachment member comprising a central opening 21 a for insertion of a fishing line therethrough. Located on the exterior surface 22 of the sinker body 21 is a layer of material 23 that forms a thin casing that partially encapsulates and forms a confinement compartment around the fishing sinker body 21. Casing 22 can be made from a variety of materials other than polymer plastic including but not limited to epoxies and metals. In addition, the casing on sinker 21 can be formed in a number of ways including such methods as dipping, spraying and plating.

Figure 5 shows a further alternate embodiment of sinker 30 wherein the casing comprises skin 32 on the sinker body 31 which formed from a net like structure. Generally, when frangible sinkers break on impact they do not shatter but fracture into large pieces, consequently, a net like covering can form a compartment to retain the fractured sinker.

While bismuth has been described herein it is understood that other fishing sinkers or alloyed fishing sinkers can be used which also fracture upon use and are therefore suitable for use with the present invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A fishing sinker comprising:
a body of frangible material, said body of frangible material having an exterior surface and a specific gravity of at least 7.0;
a member connected to said body of material for securing the body of material to a fishing line; and
a skin extending substantially around said exterior surface, said skin compressively engaging said body of material to inhibit fracture of the body of material.

2. The fishing sinker of claim 1 wherein the frangible body of material contains bismuth.

3. The fishing sinker of claim 1 wherein the skin includes a color code for identifying the sinker.

4. The fishing sinker of claim 1 wherein the skin comprise a shrink wrap plastic film compressively secured to the frangible body of material through exposure of the shrink wrap film to hot air.

5. The fishing sinker of claim 2 wherein the skin includes a color code for identifying the sinker.

6. The fishing sinker of claim 5 wherein the skin comprises a shrink wrap film.

7. The fishing sinker of claim 4 wherein the skin compressively and conformably covers at least 90 % of the frangible body of material.

8. The fishing sinker of claim 1 wherein the skin is less than .010 inches thick.

9. The fishing sinker of claim 1 wherein the fishing sinker has a stem for engaging the frangible body of material.

10. The method of making a bismuth fishing sinker:
comprising the steps of:
pouring a bismuth in a molten state into a fishing sinker mold;
allowing the bismuth to solidify in the fishing sinker mold to form a bismuth fishing sinker;
removing the solidified bismuth fishing sinker from the fishing sinker mold;
placing a shrink wrap film material around an exterior surface of the solidified bismuth; and
heating the shrink wrap film material to bring the shrink wrap film into compressive confinement of the solidified bismuth to thereby inhibit the fracturing of the bismuth fishing sinker if the bismuth fishing sinker is impacted by an external force.

11. The method of claim 10 including the step of placing a line attachment member in the bismuth fishing sinker.

12. The method of claim 10 including the step of placing a shrink wrap film comprises placing an elongated cylindrical tube of shrink wrap film around the exterior surface of the solidified bismuth sinker.

13. The method of claim 12 including the step of cutting the elongated cylindrical tube to a length about equal to a length of the solidified bismuth.

14. The method of making a fishing sinker comprising the steps of:
pouring a frangible metal having a specific gravity of at least 7.0 into a fishing sinker mold;
allowing the frangible metal to solidify in the fishing sinker mold to form a fishing sinker;
removing the solidified fishing sinker from the fishing sinker mold; and
covering the exterior surface of the solidified fishing sinker with a layer of skin to thereby provide fracture resistance to the frangible material.

15. The method of claim 14 wherein the step of covering the exterior surface comprises placing a shrink wrap film material around the exterior surface of the solidified bismuth alloy and heating the shrink wrap film material to bring the shrink wrap film into compressive confinement of the solidified fishing sinker to thereby inhibit the fracturing of the fishing sinker if the fishing sinker is impacted by an external force.

16. A three-part fishing sinker comprising:
a line attachment member;
a body of frangible material, said body of frangible material having a specific gravity sufficiently high to enable use as a fishing sinker; and
a skin compressively conforming to substantially all of an exterior surface of the body of frangible material so as to confine and retain said frangible material in the event the frangible material should fracture during use.

17. The three-part fishing sinker of claim 16 wherein the line attachment member includes a loop.

18. The three-part fishing sinker of claim 16 wherein the skin comprises a shrink-wrap plastic.

19. The three-part fishing sinker of claim 16 including a visual indicator carried by said skin of material.

20. the three-part fishing sinker of claim 19 wherein the visual indicator comprises a band of color.

21. A fishing sinker comprising:
a body of material having a specific gravity sufficiently high to enable use as a fishing sinker said body of material having an internal line attachment member for securing a fishing line thereto; and
a casing carried on an exterior surface of the body of material , said casing confining said body material therein while allowing a user free access to the line attachment member in the body of material.

22. The fishing sinker of claim 21 wherein the casing is adhesively secured to the body of the fishing sinker.

23. The fishing sinker of claim 21 wherein casing comprises a layer of metal.

24. The fishing sinker of claim 21 wherein the casing located on the exterior of the body of frangible material comprises a mesh.

25. The fishing sinker of claim 21 wherein the casing located on the body of frangible material has a thickness less than .010 inches.

26. The fishing sinker of claim 21 wherein the casing is held on the body of frangible material by an interlocking configuration.

27. The fishing sinker of claim 21 wherein the casing is a polymer plastic.

28. The fishing sinker of claim 21 wherein the casing has a specific gravity less than a specific gravity of the body of the fishing sinker.

29. The fishing sinker of claim 21 wherein casing extends around at least 90% of the body of the fishing sinker.

30. The fishing sinker of claim 21 wherein the casing is under sufficient tension to exert a compressive force against an exterior surface of the body of the sinker.

31. The fishing sinker of claim 21 wherein the specific gravity is in excess of 7.0.

32. The fishing sinker of claim 21 wherein the casing has a smooth surface to retard snagging.

33. The fishing sinker of claim 21 wherein the casing encompasses a heat shrunk plastic.
